# EUROPEAN PATENT SPECIFICATION

(11) **EP 3 053 809 B1**
(45) Date of publication and mention of the grant of the patent: **11.04.2018**
(21) Application number: 15154255.2
(22) Date of filing: 09.02.2015
(51) Int. Cl.: B62D 15/02, B60Q 1/50, B60Q 9/00, G06T 7/00, E05F 15/43, E05D 11/06

(54) **Parking assistance system**
Parkhilfesystem
Système d'assistance au stationnement

(43) Date of publication of application: 10.08.2016
(73) Proprietor: Application Solutions (Electronics and Vision) Limited, Lewes, East Sussex BN7 2 AQ (GB)
(72) Inventor: Gillott, Robert, Waterlooville, PO8 0RU (GB); Hantsch, Eric, Brighton, BN1 3RQ (GB); Rafferty, Simon, Horsham, RH12 1SB (GB); Saward, Ian, Lewes, BN7 1BH (GB); Wibberley, Dave, Brighton, BN1 6RG (GB)
(74) Representative: Büchner, Jörg

(56) References cited:
- EP-A1- 2 579 231
- EP-A1- 2 597 016
- JP-A- 2009 184 509
- US-A1- 2005 242 618
- US-A1- 2008 218 381
- US-A1- 2013 113 614
- US-A1- 2014 244 073

## Description

The invention relates to an apparatus and a method for performing parking assistance during a parking maneuver of a vehicle.

In many situations, the driver of a vehicle such as a car or a truck has to perform parking maneuvers. After having parked the vehicle in a parking space or parking lot, the parked vehicle may be too close to other objects so that it becomes difficult for passengers of the vehicle to open the vehicle doors sufficiently to leave the car. Further, the doors of the vehicle when opened may damage other objects such as other vehicles in close vicinity of the parked vehicle. Moreover, a vehicle door opened by a passenger touching another object can be damaged itself.

Accordingly, it is an object of the present invention to provide an apparatus and a method which assists the driver of the vehicle when performing a parking maneuver to avoid damages when opening the vehicle doors and to maximize available space for a passenger leaving or entering the vehicle.

Further, in US 2008/218381, which is seen as the closest prior art, a proximity sensor system for a vehicle that is parked is disclosed. The proximity sensor system includes a first remote sensor that senses objects in a rearward area relative to the vehicle. A park determination module determines the vehicle is parked. A door condition module determines a status of a door of the vehicle. A response module selectively responds to the objects based on door condition module signals. An indicator responds to response module signals.

This object is achieved according to a first aspect of the present invention by a parking assistance system for a vehicle comprising the features of claim 1.

The invention provides according to a first aspect a parking assistance system for a vehicle comprising
surround sensors adapted to provide sensor data of the vehicle's surrounding,
internal sensors adapted to detect a seat occupancy of passenger seats within the passenger room of the vehicle,
a data memory storing a vehicle data model of the vehicle including positions of vehicle doors in the vehicle's chassis and
a processing unit adapted to process the sensor data received from the surround sensors to calculate an occupancy grid map of the vehicle's surrounding and further adapted to calculate disembarking distances for the vehicle doors depending on the vehicle data model, the occupancy grid map and the detected seat occupancy.

In a possible embodiment of the parking assistance system according to the first aspect of the present invention, the parking assistance system further comprises a display adapted to display the calculated disembarking distances during a parking maneuver of the vehicle.

In a further possible embodiment of the parking assistance system according to the first aspect of the present invention, the parking assistance system further comprises a control unit adapted to control a parking maneuver of the vehicle in response to the calculated disembarking distances.

According to the present invention, the vehicle data memory is a configurable vehicle data memory including the dimensions of the vehicle's chassis, the positions of the vehicle doors in the vehicle's chassis, the length of the vehicle doors and maximum opening angles of the vehicle doors.

In a still further possible embodiment of the parking assistance system according to the first aspect of the present invention, the internal sensors are located in the passenger room of the vehicle.

In a still further possible embodiment of the parking assistance system according to the first aspect of the present invention, the internal sensors comprise seat sensors integrated in passenger seats and/or seatbelt sensors.

In a further possible embodiment of the parking assistance system according to the first aspect of the present invention, the internal sensors comprise at least one internal camera adapted to capture camera images of the passenger room.

In a still further possible embodiment of the parking assistance system according to the first aspect of the present invention, the seat sensors are adapted to provide sensor occupancy data indicating whether the corresponding passenger seats are occupied by a person.

In a still further possible embodiment of the parking assistance system according to the first aspect of the present invention, the internal sensors further provide sensor weight data indicating a weight and/or an approximate size of persons occupying passenger seats.

In a still further possible embodiment of the parking assistance system according to the first aspect of the present in vention, the processing unit receives further sensor data of child lock sensors indicating whether a child lock at a corresponding vehicle door has been activated.

In a still further possible embodiment of the parking assistance system according to the first aspect of the present invention, the surround sensors comprise surround view cameras and/or ultrasonic sensors.

In a still further possible embodiment of the parking assistance system according to the first aspect of the present invention, the processing unit is adapted to evaluate the calculated disembarking distances when the parked vehicle comes to a stand and to output an acoustic and/or an optical warning signal if the calculated disembarking distances are lower than predetermined minimum disembarking distance threshold values.

In a still further possible embodiment of the parking assistance system according to the first aspect of the present invention, a vehicle door of the parked vehicle opened by a passenger is locked at a maximum admissible opening angle depending on the calculated disembarking distance at the respective vehicle door.

The invention further provides according to a second aspect a method for performing parking assistance during a parking maneuver of a vehicle comprising the features of claim 13.

The invention provides according to the second aspect a method for performing parking assistance during a parking maneuver of a vehicle, wherein the method comprises the following steps:
providing an occupancy grid map of the vehicle's surroundings,
detecting a seat occupancy of passenger seats within the passenger room of the vehicle and
calculating disembarking distances for the vehicle doors of the vehicle depending on the occupancy grid map of the vehicle's surrounding, the detected seat occupancy of the passenger seats and depending on a vehicle data model of the vehi-, cle including positions of the vehicle doors in the vehicle's chassis.

In a possible embodiment of the method according to the second aspect of the present invention, the calculated disembarking distances are displayed during a parking maneuver of the vehicle.

In a further possible embodiment of the method according to the second aspect of the present invention, the parking maneuver of the vehicle is controlled in response to the calculated disembarking distances.

In a still further possible embodiment of the method according to the second aspect of the present invention, the calculated disembarking distances are evaluated when the parked vehicle comes to a stand and an acoustic and/or optical warning signal is output if the calculated disembarking distances are lower than predetermined minimum disembarking distance threshold values.

In the following, possible embodiments of the different aspects of the present invention are described with reference to the enclosed figures in more detail.
- Figure 1: shows a block diagram of a possible exemplary embodiment of a parking assistance system according to the first aspect of the present invention;
- Figure 2: shows a schematic diagram for illustrating a possible exemplary embodiment of a parking assistance system according to the first aspect of the present invention;
- Figure 3: shows a flowchart of a possible exemplary embodiment of a method for performing parking assistance during a parking maneuver of a vehicle according to the second aspect of the present invention;
- Figures 4A, 4B: show schematically an exemplary parking maneuver for illustrating the operation of a parking assistance system according to the first aspect of the present invention;
- Figure 5: shows a further schematic diagram for illustrating a possible exemplary embodiment of a parking assistance system according to the present invention;
- Figure 6: shows a further schematic diagram for illustrating the operation of a possible exemplary embodiment of a parking assistance system according to the first aspect of the present invention.

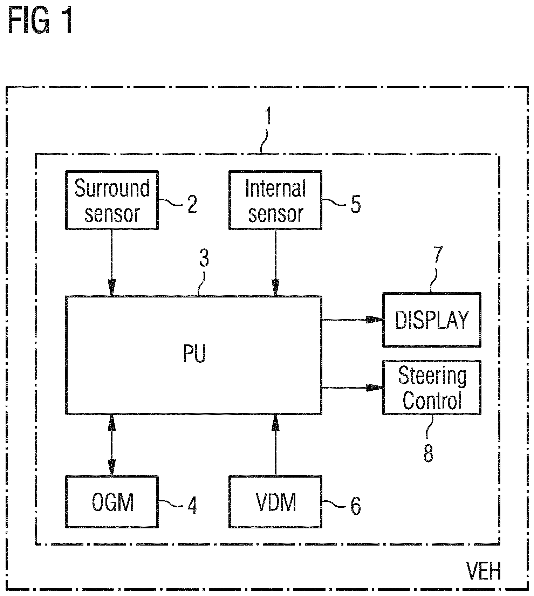

As can be seen in Figure 1, a parking assistance system 1 according to the first aspect of the present invention comprises in the illustrated embodiment at least one surround sensor 2 adapted to provide sensor data of the vehicle's surrounding. The parking assistance system 1 can form part of a driver assistance system of the vehicle VEH. In a possible embodiment, the surround sensors 2 can comprise surround view cameras and/or ultrasonic sensors. The parking assistance system 1 comprises a processing unit 3 adapted to process the sensor data received from the surround sensors 2 to calculate an occupancy grid map OGM of the vehicle's surrounding. The calculated occupancy grid map OGM can be stored in a memory 4 of the parking assistance system 1.

The parking assistance system 1 further comprises internal sensors 5 adapted to detect a seat occupancy SO of passenger seats within the passenger room PR of the vehicle VEH. In a possible embodiment, the internal sensors 5 comprise seat sensors 5A, 5B integrated in the passenger seats. In a further possible embodiment, the internal sensors 5 can also comprise at least one internal camera 5C adapted to capture camera images of the passenger room PR. For evaluating the camera images CI captured by the internal camera 5C the image processing entity of the processing unit 3 is adapted to extract features from the captured images CI to detect persons sitting within the passenger room PR and to detect a seat occupancy SO of the passenger seats within the passenger room PR of the vehicle VEH. In a possible embodiment, the seat sensors 5A, 5B are integrated in passenger seats 9A, 9B and can provide sensor occupancy data indicating, whether the corresponding passenger seat 9A, 9B is occupied by a person P. In a further possible embodiment, the seat sensors integrated in the passenger seats can provide sensor weight data indicating a weight and/or an approximate size of persons P occupying the corresponding passenger seats.

The parking assistance system 1 as illustrated in Figure 1 further comprises a data memory 6 adapted to store a vehicle data model VDM of the vehicle VEH including positions of vehicle doors VDs in the vehicle's chassis. In a possible embodiment, the vehicle data model VDM stored in the data memory 6 is configurable via a data interface of the system.

The processing unit 3 of the parking assistance system 1 is adapted to process the sensor data received from the surround sensors 2 to calculate the occupancy grid map OGM of the vehicle's surrounding stored in the memory 4 and is further adapted to calculate disembarking distances for the vehicle doors VDs of the vehicle VEH depending on the stored vehicle data model VDM, the current occupancy grid map OGM and the current detected seat occupancy SO of the passenger seats within the passenger room PR.

In a possible embodiment, the parking assistance system 1 can further comprise a display 7 adapted to display the calculated disembarking distances during a parking maneuver of the vehicle VEH. In a final phase of the parking maneuver, the driver of the vehicle VEH can monitor the disembarking distances calculated by the processing unit 3 and displayed to the driver on the display 7. When the vehicle VEH comes to a stand the available disembarking distances are displayed to the driver so that he can decide whether the position of the vehicle VEH allows a disembarking of all passengers P within the vehicle VEH. In the embodiment illustrated in Figure 1, the parking assistance system 1 comprises a steering control unit 8 which can perform a steering control for steering support of the vehicle VEH during the parking maneuver. In a possible embodiment, the steering control-unit is adapted to control the parking maneuver of the vehicle-VEH in response to the calculated disembarking distances provided by the processing unit 3.

The vehicle data model VDM stored in the memory 6 is a configurable vehicle data model corresponding to the type of the vehicle VEH including dimensions of the vehicle's chassis, in particular the positions of the vehicle doors VDs in the vehicle's chassis. The vehicle data model VDM further includes in a possible embodiment the length of the vehicle doors and/or the maximum opening angles of the vehicle doors.

In a possible embodiment, the processing unit 3 is adapted to evaluate the calculated disembarking distances when the parked vehicle VEH comes to a stand and to output an acoustic and/or an optical warning signal via a user interface if the calculated disembarking distances are lower than predetermined minimum disembarking distance threshold values. In a possible embodiment, a vehicle door VD of the parked vehicle opened by a passenger P is locked at a maximum admissible opening angle depending on the calculated disembarking distance of the respective vehicle door. The maximum admissible opening angle can be calculated by the processing unit 3 on the basis of the vehicle data of the vehicle data model VDM, in particular on the basis of the vehicle door positions within the vehicle's chassis and the individual length of the vehicle door. In a possible embodiment, the processing unit 3 receives further sensor data of child lock sensors indicating whether a child lock at a corresponding vehicle door has been activated. In a further possible embodiment, the internal sensors 5 can comprise seat belt sensors indicating the presence of a passenger P in a corresponding passenger seat. By evaluating the sensor data received by the internal sensors 5 comprising seat sensors integrated in passenger seats and/or seat belt sensors and/or by evaluating camera images CI generated by internal cameras capturing camera images of the passenger room PR the processing unit 3 can detect which seats in the passenger room PR are occupied and which seats are not occupied. Internal sensors 5 in a possible embodiment provide additional sensor data indicating a weight and/or an approximate size of persons P occupying passenger seats within the passenger room PR.

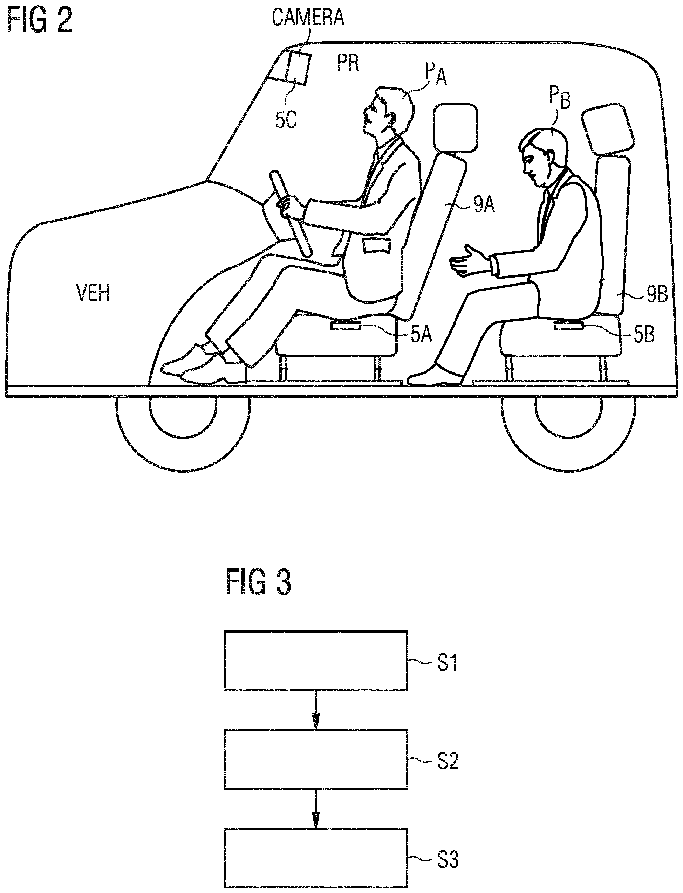

Figure 2 illustrates schematically a passenger room PR of a vehicle VEH having internal sensors comprising seat sensors 5A, 5B integrated in passenger seats 9A, 9B occupied by passengers P_{A}, P_{B}. The first passenger in the front row P_{A} is the driver of the vehicle VEH and steering the vehicle VEH during a parking maneuver. The internal sensors 5 further comprise an internal camera 5C adapted to capture camera images CI of the passenger room PR. The sensor data generated by the internal sensors 5A, 5B, 5C are supplied to the processing unit 3 and processed to determine a seat occupancy SO of the passenger seats within the passenger room PR.

Figure 3 shows a flowchart for illustrating a possible exemplary embodiment of the method according to an aspect of the present invention.

In a first step S1, an occupancy grid map OGM of the vehicle's surrounding is provided.

In a further step S2, a seat occupancy SO of passenger seats within the passenger room PR of the vehicle VEH is detected.

In a third step S3, disembarking distances of the vehicle doors VDs of the vehicle VEH are calculated depending on the occupancy grid map OGM of the vehicle's surrounding, the detected seat occupancy SO of the passenger seats and depending on the vehicle data model VDM of the vehicle VEH including positions of the vehicle doors VDs within the vehicle's chassis.

Disembarking distances calculated in step S3 can be displayed during a parking maneuver of the vehicle VEH. Further, the calculated disembarking distances can be used to control or influence a parking maneuver in response to the calculated disembarking distances during the parking maneuver.

The calculated disembarking distances can be evaluated when the parked vehicle VEH comes to a stand and can be compared to stored minimum disembarking distance threshold values. If the calculated disembarking distances, after the parking maneuver has been finished and the vehicle VEH comes to a stand, are lower than predetermined minimum disembarking distance threshold values, an acoustic and/or an optical warning signal can be output in a possible embodiment.

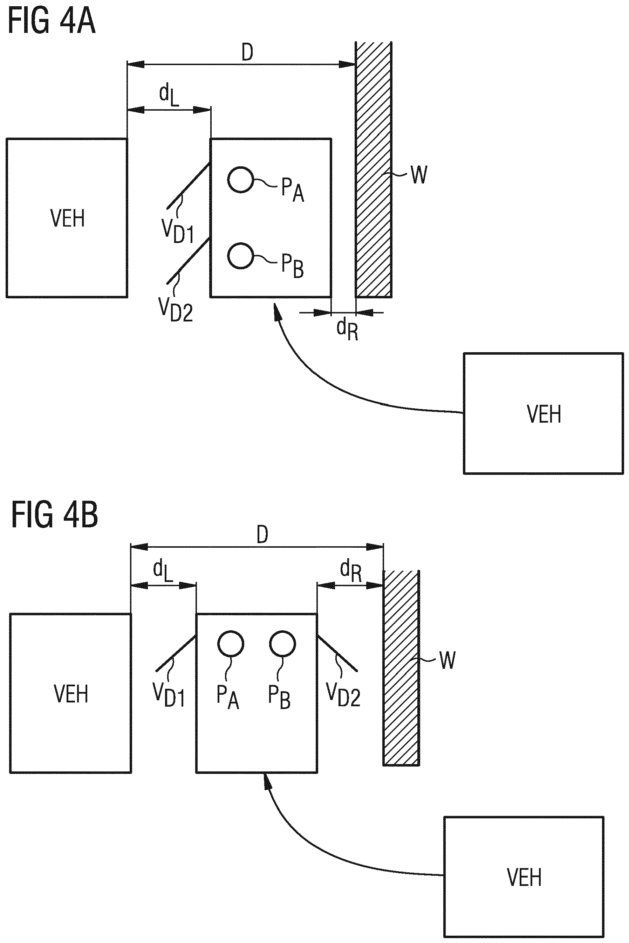

Figure 4A shows schematically a parking maneuver of a vehicle VEH for illustrating the operation of a parking assistance system 1 according to the present invention. As shown in Figure 4A, the vehicle VEH comprising the parking assistance system 1 transports two passengers P_{A}, P_{B} and is driven by the driver P_{A} sitting in the driver's seat into a parking space or parking lot between another vehicle VEH' and another obstacle such as a wall W. In the illustrated embodiment, the detected seat occupancy SO indicates that both passengers P_{A}, P_{B} sit on the left side within the passenger room PR, i.e. the side of the driver's seat. The parking assistance system 1 according to the present invention supports the parking maneuvers such that the vehicle VEH is parked closer to the wall W on the right side so that both passengers P_{A}, P_{B} can disembark the vehicle VEH more easily by opening the vehicle doors VD1, VD2 at a maximum possible opening angle as shown in Figure 4A. As can be seen in Figure 4A, the distance d_{R} between the wall W and the vehicle's chassis is smaller than the distance d_{L} on the left side between the other vehicle VEH' parked on the left and the vehicle VEH. In this way, the available distance D of the parking space is used in an optimal way and both passengers P_{A}, P_{B} can leave the vehicle VEH with maximum comfort. Moreover, the risk that another vehicle VEH' is damaged by the opened vehicle doors is minimized.

Figure 4B illustrates the same parking maneuver as in Figure 4A with a different seat occupancy SO. In this example, the second passenger P_{B} sits besides the driver in front of the passenger room. In this case, the parking assistance system 1 according to the present invention supports the driving maneuver such that the vehicle VEH is parked in the center between the obstacles defining the parking space. After the parking maneuver, the vehicle VEH is parked such that the distance to the left obstacle d_{L} is equal to the distance d_{R} to the right obstacle W.

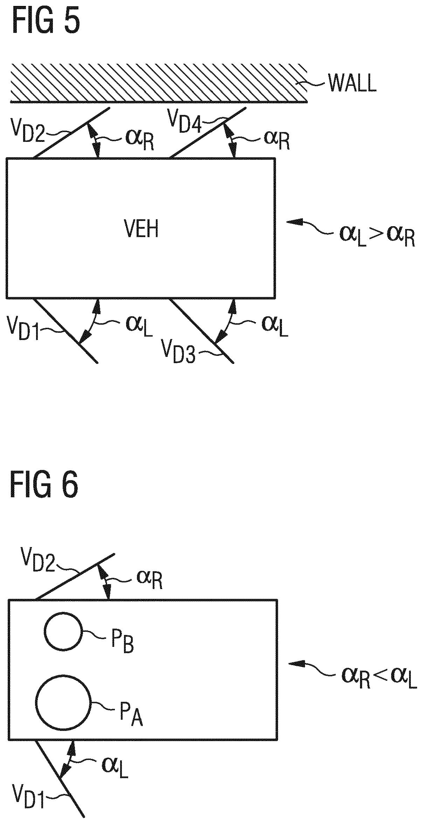

Figure 5 shows schematically a vehicle VEH comprising a parking assistance system 1 according to the present invention having four vehicle doors VD1, VD2, VD3, VD4. According to the invention, a vehicle door VD of the parked vehicle VEH opened by a passenger P is locked automatically at a maximum admissible opening angle α depending on the calculated disembarking distance at the respective vehicle door VD. As shown in the example of Figure 4, because of the close wall W the maximum admissible opening angle of the vehicle doors VD2, VD4 on the right side of the parked vehicle VEH is smaller than the maximum admissible angle of the other two vehicle doors VD1, VD3 on the left side of the vehicle's chassis. Accordingly, passengers P leaving the vehicle VEH on the left side have a maximum available space, thus increasing the comfort of the passengers. By locking the vehicle doors VD2, VD4 at a maximum admissible opening angle on the right side of the vehicle's chassis it is avoided that the vehicle doors VD2, VD4 touch the wall W and can be damaged.

Figure 6 shows a further schematic diagram for illustrating a further possible embodiment of the parking assistance system 1 according to the present invention. In the illustrated example, the passenger P_{A} driving the car is an adult accompanied by a smaller person such as a child P_{B}. In a possible embodiment, this is detected by the parking assistance system 1 by evaluating sensor weight data indicating a weight of a person P provided for instance by seat sensors integrated in passenger seats. Further, a camera image CI of the passenger room can be evaluated to detect an approximate size of a person P occupying the passenger seats. Depending on the detected size of the person, the parking assistance system 1 calculates necessary opening angles of the vehicle doors which still allow the person P to leave the car. In the example shown in Figure 6, the vehicle door VD1 on the left side of the vehicle, i.e. on the driver's side, can be opened to a larger extent with a greater opening angle α_{L} than the other vehicle door VD2 on the-right side of -the vehicle VEH where - the small person P_{B} leaves the vehicle VEH. In the example shown in Figure 6, the parking assistance system 1 will during a parking maneuver assist the driver in parking the vehicle VEH more to the right side leaving more space for the adult driver P_{A} than for the child P_{B} which needs less room to leave the car or vehicle VEH. The method and apparatus according to the present invention improves the safety during parking maneuvers and increases the comfort of passengers P entering or leaving a vehicle VEH. The parking of the vehicle VEH too close to other objects or obstacles is avoided and the risk of damages caused by opening doors of the vehicle touching other objects or obstacles is reduced.

### REFERENCE SIGNS

- 1: parking assistance system
- 2: surround sensors
- 3: processing unit
- 4: memory
- 5: internal sensors
- 5A, 5B: seat sensors
- 5C: camera
- 6: memory
- 7: display
- 8: steering control
- 9A, 9B: passenger seats
- VEH: vehicle
- P: passenger
- VD: vehicle door

## Claims

1. A parking assistance system (1) for a vehicle (VEH) comprising:
- surround sensors (2) adapted to provide sensor data of the vehicle's surrounding;
- internal sensors (5) adapted to detect a seat occupancy, SO, of passenger seats within the passenger room (PR) of the vehicle (VEH);
- a data memory (6) storing a vehicle data model, VDM, of the vehicle (VEH), wherein the vehicle data model, VDM, is a configurable vehicle data model including the dimensions of the vehicle's chassis, the positions of the vehicle doors (VDs) in the vehicle's chassis, and further at least one of the length of the vehicle doors (VDs) and the maximum opening angles of the vehicle doors;
- a processing unit (3) adapted to process the sensor data received from the surround sensors (2) to calculate an occupancy grid map, OGM, of the vehicle's surrounding and further adapted to calculate disembarking distances for the vehicle doors (VDs) depending on the vehicle data model, VDM, the occupancy grid map, OGM, and the detected seat occupancy, SO, wherein a maximum admissible opening angle is calculated for the vehicle door of each passenger seat detected as occupied depending on the calculated disembarking distance at said vehicle door.

2. The parking assistance system according to claim 1 further comprising a display (7) adapted to display the calculated disembarking distances during a parking maneuver of the vehicle (VEH).

3. The parking assistance system according to claim 1 or 2 further comprising a control unit (8) adapted to control a parking maneuver of the vehicle (VEH) in response to the calculated disembarking distances.

4. The parking assistance system according to one of the preceding claims 1 to 3, wherein the internal sensors (5) are located in the passenger room (PR) of the vehicle (VEH).

5. The parking assistance system according to claim 4,
wherein the internal sensors (5) comprise seat sensors (5A, 5B) integrated in the passenger seats (9A, 9B), seat belt sensors and/or at least one internal camera (5C) adapted to capture camera images of the passenger room (PR) .

6. The parking assistance system according to claim 5,
wherein the seat sensors (5A, 5B) are adapted to provide sensor occupancy data indicating whether the corresponding passenger seat (9A, 9B) is occupied by a person (P).

7. The parking assistance system according to claim 5 or 6, wherein the internal sensors (5) further provide sensor weight data indicating a weight and/or an approximate size of persons (P) occupying passenger seats.

8. The parking assistance system according to one of the preceding claims 1 to 7, wherein the processing unit (3) receives further sensor data of child lock sensors indicating whether a child lock at a corresponding vehicle door (VD) has been activated.

9. The parking assistance system according to one of the preceding claims 1 to 8, wherein the surround sensors (2) comprise surround view cameras and/or ultrasonic sensors.

10. The parking assistance system according to one of the preceding claims 1 to 9, where the processing unit (3) is adapted to evaluate the calculated disembarking distances when the parked vehicle comes to a stand and to output an acoustic and/or an optical warning signal if the calculated disembarking distances are lower than predetermined minimum disembarking distance threshold values.

11. The parking assistance system according to one of the preceding claims 1 to 10, wherein a vehicle door (VD) of the parked vehicle (VEH) opened by a passenger (P) is locked at the maximum admissible opening angle depending on the calculated disembarking distance at the respective vehicle door (VD).

12. A method for performing parking assistance during a parking maneuver of a vehicle (VEH), said method comprises the following steps:
- (a) providing (S1) an occupancy grid map, OGM, of the vehicle's surroundings,
- (b) detecting (S2) a seat occupancy, SO, of passenger seats within the passenger room (PR) of the vehicle (VEH);
- (c) calculating (S3) disembarking distances for the vehicle doors (VDs) of the vehicle (VEH) depending on the occupancy grid map, OGM, of the vehicle's surrounding, the detected seat occupancy, SO, of the passenger seats and depending on a vehicle data model, VDM, of the vehicle (VEH), wherein the vehicle data model, VDM, is a configurable vehicle data model including the dimensions of the vehicle's chassis, the positions of the vehicle doors (VDs) in the vehicle's chassis, and further at least one of the length of the vehicle doors (VDs) and the maximum opening angles of the vehicle doors,
wherein a maximum admissible opening angle is calculated for the vehicle door of each passenger seat detected as occupied depending on the calculated disembarking distance at said vehicle door.

13. The method according to claim 12, wherein the calculated disembarking distances are displayed during a parking maneuver of the vehicle (VEH) and/or wherein a parking maneuver of the vehicle (VEH) is controlled in response to the calculated disembarking distances.

14. The method according to claim 13, wherein the calculated disembarking distances are evaluated when the parked vehicle (VEH) comes to a stand and an acoustic and/or optical warning signal is output if the calculated disembarking distances are lower than predetermined minimum disembarking distance threshold values.

## Patentansprüche

1. Parkassistenzsystem (1) für ein Fahrzeug (VEH), umfassend:
- Umgebungssensoren (2), die so angepasst sind, dass sie Sensordaten der Fahrzeugumgebung bereitstellen;
- interne Sensoren (5), die so angepasst sind, dass sie eine Sitzbelegung, SO, von Fahrgastsitzen innerhalb des Fahrgastraums (PR) des Fahrzeugs (VEH) detektieren;
- einen Datenspeicher (6), der ein Fahrzeugdatenmodell, VDM, des Fahrzeugs (VEH) speichert, wobei das Fahrzeugdatenmodell (VDM) ein konfigurierbares Fahrzeugdatenmodell ist, das die Abmessungen des Fahrzeugfahrgestells, die Positionen der Fahrzeugtüren (VDs) in dem Fahrzeugfahrgestell und ferner die Länge der Fahrzeugtüren (VDs) oder/und die maximalen Öffnungswinkel der Fahrzeugtüren einschließt;
- eine Verarbeitungseinheit (3), die so angepasst ist, dass sie die aus den Umgebungssensoren (2) empfangenen Sensordaten verarbeitet, um eine Belegungsgitterkarte, OGM, der Fahrzeugumgebung zu berechnen, und ferner so angepasst ist, dass sie Aussteigeabstände für die Fahrzeugtüren (VDs) in Abhängigkeit von dem Fahrzeugdatenmodell, VDM, der Belegungsgitterkarte ,OGM, und der detektierten Sitzbelegung, SO, berechnet, wobei ein maximal zulässiger Öffnungswinkel für die Fahrzeugtür jedes als belegt detektierten Fahrgastsitzes in Abhängigkeit von dem berechneten Aussteigeabstand an der Fahrzeugtür berechnet ist.

2. Parkassistenzsystem nach Anspruch 1, ferner umfassend eine Anzeige (7), die so angepasst ist, dass sie die berechneten Aussteigeabstände während eines Parkmanövers des Fahrzeugs (VEH) anzeigt.

3. Parkassistenzsystem nach Anspruch 1 oder 2, ferner umfassend eine Regeleinheit (8), die so angepasst ist, dass sie ein Parkmanöver des Fahrzeugs (VEH) als Antwort auf die berechneten Aussteigeabstände regelt.

4. Parkassistenzsystem nach einem der vorangehenden Ansprüche 1 bis 3, wobei sich die internen Sensoren (5) in dem Fahrgastraum (PR) des Fahrzeugs (VEH) befinden.

5. Parkassistenzsystem nach Anspruch 4, wobei die internen Sensoren (5) umfassen: in die Fahrgastsitze (9A, 9B) integrierte Sitzsensoren (5A, 5B), Sicherheitsgurtsensoren und/oder mindestens eine interne Kamera (5C), die so angepasst ist, dass sie Kamerabilder des Fahrgastraums (PR) erfasst.

6. Parkassistenzsystem nach Anspruch 5, wobei die Sitzsensoren (5A, 5B) so angepasst sind, dass sie Sensorbelegungsdaten bereitstellen, die anzeigen, ob der entsprechende Fahrgastsitz (9A, 9B) durch eine Person (P) belegt ist.

7. Parkassistenzsystem nach Anspruch 5 oder 6, wobei die internen Sensoren (5) ferner Sensorgewichtsdaten bereitstellen, die ein Gewicht und/oder eine ungefähre Größe von Personen (P), die Fahrgastsitze belegen, anzeigen.

8. Parkassistenzsystem nach einem der vorangehenden Ansprüche 1 bis 7, wobei die Verarbeitungseinheit (3) weitere Sensordaten von Kindersicherungssensoren empfängt, die anzeigen, ob eine Kindersicherung an einer entsprechenden Fahrzeugtür (VD) aktiviert worden ist.

9. Parkassistenzsystem nach einem der vorangehenden Ansprüche 1 bis 8, wobei die Umgebungssensoren (2) Rundumsichtkameras und/oder Ultraschallsensoren umfassen.

10. Parkassistenzsystem nach einem der vorangehenden Ansprüche 1 bis 9, wobei die Verarbeitungseinheit (3) so angepasst ist, dass sie die berechneten Aussteigeabstände auswertet, wenn das geparkte Fahrzeug zum Stehen kommt, und ein akustisches und/oder ein optisches Warnsignal ausgibt, falls die berechneten Aussteigeabstände geringer als vorgegebene minimale Aussteigeabstandsschwellenwerte sind.

11. Parkassistenzsystem nach einem der vorangehenden Ansprüche 1 bis 10, wobei eine durch einen Fahrgast (P) geöffnete Fahrzeugtür (VD) des geparkten Fahrzeugs (VEH) in dem maximal zulässigen Öffnungswinkel in Abhängigkeit von dem berechneten Aussteigeabstand an der jeweiligen Fahrzeugtür (VD) verriegelt ist.

12. Verfahren zur Durchführung einer Parkassistenz während eines Parkmanövers eines Fahrzeugs (VEH), wobei das Verfahren die folgenden Schritte umfasst:
- (a) Bereitstellen (S1) einer Belegungsgitterkarte (OGM) der Fahrzeugumgebung,
- (b) Detektieren (S2) einer Sitzbelegung (SO) von Fahrgastsitzen innerhalb des Fahrgastraums (PR) des Fahrzeugs (VEH);
- (c) Berechnen (S3) von Aussteigeabständen für die Fahrzeugtüren (VDs) des Fahrzeugs (VEH) in Abhängigkeit von der Belegungsgitterkarte, OGM, der Fahrzeugumgebung, der detektierten Sitzbelegung, SO der Fahrgastsitze und in Abhängigkeit von einem Fahrzeugdatenmodell, VDM, des Fahrzeugs (VEH), wobei das Fahrzeugdatenmodell, VDM, ein konfigurierbares Fahrzeugdatenmodell ist, das die Abmessungen des Fahrzeugfahrgestells, die Positionen der Fahrzeugtüren (VDs) in dem Fahrzeugfahrgestell und ferner die Länge der Fahrzeugtüren (VDs) oder/und die maximalen Öffnungswinkel der Fahrzeugtüren einschließt,
wobei ein maximal zulässiger Öffnungswinkel für die Fahrzeugtür jedes als belegt detektierten Fahrgastsitzes in Abhängigkeit von dem berechneten Aussteigeabstand an der Fahrzeugtür berechnet wird.

13. Verfahren nach Anspruch 12, wobei die berechneten Aussteigeabstände während eines Parkmanövers des Fahrzeugs (VEH) angezeigt werden und/oder wobei ein Parkmanöver des Fahrzeugs (VEH) als Antwort auf die berechneten Aussteigeabstände geregelt wird.

14. Verfahren nach Anspruch 13, wobei die berechneten Aussteigeabstände ausgewertet werden, wenn das geparkte Fahrzeug (VEH) zum Stehen kommt, und ein akustisches und/oder optisches Warnsignal ausgegeben wird, falls die berechneten Aussteigeabstände geringer als vorgegebene minimale Aussteigeabstandsschwellenwerte sind.

## Revendications

1. Système d'aide au stationnement (1) pour un véhicule (VEH), comprenant :
- des capteurs d'environnement (2) conçus pour fournir des données de capteur de l'environnement du véhicule ;
- des capteurs internes (5) conçus pour détecter une occupation de siège, SO, des sièges passagers à l'intérieur de l'habitacle passagers (PR) du véhicule (VEH) ;
- une mémoire de données (6) stockant un modèle de données de véhicule, VDM, du véhicule (VEH), le modèle de données de véhicule, VDM, étant un modèle de données de véhicule configurable comprenant les dimensions du châssis du véhicule, les positions des portes de véhicule (VDs) dans le châssis du véhicule, et en outre au moins un élément parmi la longueur des portes de véhicule (VDs) et les angles d'ouverture maximums des portes de véhicule ;
- une unité de traitement (3) conçue pour traiter les données de capteur reçues des capteurs d'environnement (2) pour calculer un plan quadrillé d'occupation, OGM, de l'environnement du véhicule et conçue en outre pour calculer des distances de débarquement des portes de véhicule (VDs) en fonction du modèle de données de véhicule, VDM, le plan quadrillé d'occupation ,OGM, et l'occupation de sièges détectée, SO, un angle d'ouverture maximum admissible étant calculé pour la porte de véhicule de chaque siège de passager détecté comme occupé en fonction de la distance de débarquement calculée à ladite porte de véhicule.

2. Système d'aide au stationnement selon la revendication 1, comprenant en outre un écran (7) conçu pour afficher les distances de débarquement calculées pendant une manoeuvre de stationnement du véhicule (VEH).

3. Système d'aide au stationnement selon la revendication 1 ou 2, comprenant une unité de contrôle (8) conçue pour contrôler une manoeuvre de stationnement du véhicule (VEH) en réponse aux distances de débarquement calculées.

4. Système d'aide au stationnement selon l'une des revendications précédentes 1 à 3, les capteurs internes (5) étant situés dans l'habitacle passagers (PR) du véhicule (VEH).

5. Système d'aide au stationnement selon la revendication 4, les capteurs internes (5) comprenant des capteurs de sièges (5A, 5B) intégrés aux sièges passagers (9A, 9B), des capteurs de ceintures de sécurité et/ou au moins une caméra interne (5C) conçue pour capturer des images de l'habitacle passagers (PR).

6. Système d'aide au stationnement selon la revendication 5, les capteurs de sièges (5A, 5B) étant conçus pour fournir des données d'occupation indiquant si le siège de passager (9A, 9B) correspondant est occupé par une personne (P).

7. Système d'aide au stationnement selon la revendication 5 ou 6, les capteurs internes (5) fournissant en outre des données de poids indiquant un poids et/ou une taille approximative de personnes (P) occupant les sièges passagers.

8. Système d'aide au stationnement selon l'une des revendications précédentes 1 à 7, l'unité de traitement (3) recevant des données de capteurs supplémentaires de capteurs de verrouillage enfant indiquant si un verrouillage enfant à une porte de véhicule (VD) correspondante a été activé.

9. Système d'aide au stationnement selon l'une des revendications précédentes 1 à 8, les capteurs d'environnement (2) comprenant des caméras de vue panoramique et/ou des capteurs à ultrasons.

10. Système d'aide au stationnement selon l'une des revendications précédentes 1 à 9, l'unité de traitement (3) étant conçue pour évaluer les distances de débarquement calculées lorsque le véhicule en stationnement s'arrête et pour émettre un signal d'avertissement acoustique et/ou visuel si les distances de débarquement calculées sont inférieures à des valeurs seuils de distance de débarquement minimum prédéterminées.

11. Système d'aide au stationnement selon l'une des revendications précédentes 1 à 10, une porte de véhicule (VD) du véhicule (VEH) en stationnement ouverte par un passager (P) étant verrouillée à l'angle d'ouverture maximum admissible en fonction de la distance de débarquement calculée de la porte de véhicule (VD) respective.

12. Procédé pour exécuter une aide au stationnement pendant une manoeuvre de stationnement d'un véhicule (VEH), ledit procédé comprenant les étapes suivantes :
- (a) fournir (S1) un plan quadrillé d'occupation, OGM, de l'environnement du véhicule ;
- (b) détecter (S2) une occupation de siège, SO, des sièges passagers à l'intérieur de l'habitacle passagers (PR) du véhicule (VEH) ;
- (c) calculer (S3) des distances de débarquement pour les portes de véhicule (VDs) du véhicule (VEH) en fonction du plan quadrillé d'occupation, OGM, de l'environnement du véhicule, de l'occupation des sièges détectée, SO, des sièges passagers et en fonction du modèle de données de véhicule, VDM, du véhicule (VEH), le modèle de données de véhicule, VDM, étant un modèle de données de véhicule configurable comprenant les dimensions du châssis du véhicule, les positions des portes de véhicule (VDs) dans le châssis du véhicule, et en outre au moins un élément parmi la longueur des portes de véhicule (VDs) et les angles d'ouverture maximums des portes de véhicule ;
un angle d'ouverture maximum admissible étant calculé pour la porte de véhicule de chaque siège passager détecté comme occupé en fonction de la distance de débarquement calculée de ladite porte de véhicule.

13. Procédé selon la revendication 12, les distances de débarquement calculées étant affichées pendant une manoeuvre de stationnement du véhicule (VEH) et/ou une manoeuvre de stationnement du véhicule (VEH) étant contrôlée en réponse aux distances de débarquement calculées.

14. Procédé selon la revendication 13, les distances de débarquement calculées étant évaluées lorsque le véhicule en stationnement (VEH) s'arrête et un signal d'avertissement acoustique et/ou visuel étant émis si les distances de débarquement calculées sont inférieures à des valeurs seuils de distance de débarquement minimum prédéterminées.
